# EUROPÄISCHE PATENTSCHRIFT

(11) **EP 0 494 477 B1**
(45) Veröffentlichungstag und Bekanntmachung des Hinweises auf die Patenterteilung: **14.12.1994**
(21) Anmeldenummer: 91250338.0
(22) Anmeldetag: 18.12.1991
(51) Int. Cl.: E06B 5/16

(54) **Tragwerk zur Halterung von Brandschutzverglasungen**
Support structure for fixing fire-resistant glazing
Structure support pour la fixation de vitrages pare-feu

(30) Priorität: 21.12.1990 DE 4041990
(43) Veröffentlichungstag der Anmeldung: 15.07.1992
(73) Patentinhaber: MANNESMANN Aktiengesellschaft, 40027 Düsseldorf (DE); Schott Glaswerke, 55122 Mainz (DE); Carl-Zeiss-Stiftung trading as SCHOTT GLASWERKE, 55122 Mainz (DE)
(72) Erfinder: Schweins, Franz-Josef, W-4700 Hamm 5 (DE); Leroux, Roland, Dr. rer. nat., W-6501 Stadecken-Elsheim (DE); Hepp, Bernhard, Dipl.-Ing., W-6535 Gau-Algesheim (DE)
(74) Vertreter: Meissner, Peter E., Dipl.-Ing.

(56) Entgegenhaltungen:
- EP-A- 0 384 418
- DE-A- 3 812 223

## Beschreibung

Die Erfindung betrifft ein Tragwerk zur Halterung von Brandschutzverglasung für vertikale, diagonale und horizontale Bausysteme gemäß dem Gattungsbegriff des Anspruches 1.

Entsprechend der DIN 4102 Teil 13, Tabelle 3 oder anderer vergleichbarer ausländischer Normen, wie z. B. BS 476, SBN 1980, NEN 3885, Une 23-801-79 oder ISO 3009, werden an die Tragwerke zur Halterung von Brandschutzverglasungen im Hochbau hohe Anforderungen gestellt. Dies gilt in abgeschwächter Form auch für G-Verglasung, bei der im Brandfall die Verglasung nicht unter Eigenlast zusammenbrechen darf, der Durchgang von Feuer und Rauch verhindert und die Verglasung als Raumabschluß wirksam bleiben muß und bei der auf der feuerabgekehrten Seite keine Flammen auftreten dürfen.

Eine der Schwierigkeiten, die dabei gelöst werden müssen, ist im Brandfall die möglichst rasche Erwärmung der Randbereiche des Verbundglasscheibenelementes, insbesondere im Einspannbereich sicherzustellen. Wird der Temperaturunterschied des im Brandfall sich erwärmenden Verbundglasscheibenelementes zwischen der zentralen Fläche und den Randbereichen zu groß, dann kann das Element zu Bruch gehen und der geforderte Raumabschluß ist nicht mehr gewährleistet.

Der andere Problemkreis betrifft die gleichzeitige Erfüllung der DIN 18055 bezüglich der Abweisung von Wind und Wasser im glasfreien Befestigungsbereich zwischen den beiden eingespannten Verbundglasscheibenelementen und z.B. der DIN 4102 Teil 13, daß im Brandfall auf der feuerabgekehrten Seite keine Flammen auftreten dürfen.

Ein gattungsbildendes Tragwerk ist der DE-A-39 05 727 zu entnehmen, bei welchen Scheiben für Brandschutzverglasungen zwischen einem Halteprofil und einer Halteleiste und zwischen diesen und den Scheiben angebrachte elastische und temperaturbeständige Dichtelemente angeordnet sind. Das Halteprofil ist als im wesentlichen C-förmiges offenes Profil ausgebildet, dessen flächig auf das Dichtelement wirkende Schenkel wahlweise nach innen und/oder noch außen sich erstrecken und dabei eine Abflußrinne bilden können. Die Scheiben liegen auf einem als abgewinkeltes Blech ausgebildetes Lagerelement auf, das zusammen mit dem Halteprofil mittels eines Schraubbolzens lösbar mit einem das Tragwerk bildende Tragprofil verbunden ist. Nachteilig bei dieser Konstruktion ist, daß durch die Nachgiebigkeit des offenen Halteprofiles die übertragbaren Anpreßkräfte nur gering sein können oder alternativ in aufwendiger Weise zur Versteifung ein Abdeckelement angeordnet werden muß. Ein weiterer Nachteil ist darin zu sehen, daß die empfindlichen Dichtelemente ungeschützt der Außenatmosphäre ausgesetzt sind und deshalb längerfristig in ihrer Wirksamkeit beeinträchtigt werden können.

Aufgabe der Erfindung ist es, ein verbessertes Tragwerk zur Halterung von Brandschutzverglasung anzugeben, mit dem unter Vermeidung der zuvor geschilderten Nachteile in einfacher Weise für eine Feuerwiderstandsdauer von mindestens 30 min die Anforderungen der genannten Normen erfüllt werden.

Diese Aufgabe wird mit den im kennzeichnenden Teil des Anspruches 1 angegebenen Merkmalen gelöst. Vorteilhafte Weiterbildungen sind Bestandteil von Unteransprüchen.

An dem die als Verbundglasscheibenelement ausgebildete Brandschutzverglasung tragenden Metallrahmen sind auf der Außenseite im Abstand voneinander zwei parallel liegende Halteprofile in Form von geschlossenen Hohlprofilen befestigt. Beide Halteprofile sind im wesentlichen rechteckig und weisen an beiden Schmalseiten einen C-förmigen Kanal auf. Zwischen den beiden Halteprofilen ist über aufliegende Keramikfaserschichten der Randbereich des Verbundglasscheibenelementes eingespannt. Die empfindlichen Keramikfaserschichten werden insbesondere auf der Außenseite vor dem Angriff von Wind und Wetter dadurch geschützt, daß in dem C-förmigen Kanal der Halteprofile je eine die Keramikfaserschichten abdeckende Dichtung angeordnet ist. Damit die Wärme im Brandfall rasch an den Randbereich des Elementes herangeführt werden kann, weisen die den Metallrahmen bildenden Hohlprofile einen nach außen gerichteten nasenförmigen Vorsprung auf, so daß der den ungehinderten Wärmezutritt abdeckende Befestigungsbereich zwischen Metallrahmen und Halteprofil klein gehalten wird.

Durch diene konstruktive Ausführung kann ein großer Teil der Breitseite des innenliegenden Halteprofiles rasch erwärmt und damit auch dem Randbereich des Verbundglasscheibenelementes ausreichend Wärme zugeführt werden.

Die Erwärmung der Längsseite des Halteprofiles ist dagegen von untergeordneter Bedeutung. Der Metallrahmen kann eine geschweißte Konstruktion sein oder alternativ dazu in vorteilhafter Weise aus einem an sich bekannten Pfosten-Riegelsystem bestehen. Dazu wird beispielsweise auf die DE-OS 38 43 737 verwiesen. Solche Pfosten-Riegelsysteme sind sehr anpassungsfähig und der Herstell- und Montageaufwand ist geringer im Vergleich zu einer Schweißkonstruktion.

Das Verbundglasscheibenelement weist unabhängig von seinem detaillierten Aufbau eine im Brandfall verdampfende Zwischenschicht auf. Die Vorschrift besagt nun, daß dieses Gas nicht nach außen, d.h. auf die feuerabgekehrte Seite dringen darf. Damit es nicht zu einem unkontrollierten Druckanstieg im Glasfalzraum kommt, weist das innenliegende Halteprofil auf der dem Verbundglasscheibenelement zugewandten Seite im glasfreien Bereich und im Bodenbereich des C-förmigen Kanals mehrere im Abstand voneinander angeordnete Öffnungen auf. Da nachgewiesenermaßen im Brandfall das übliche in dem C-förmigen Kanal angeordnete Dichtmaterial wegbrennt, wird die Öffnung im Bodenhereich der Längsseite freigegeben, so daß das verdampfende Zwischenschichtgas in den Innenraum, d.h. auf der feuerzugewandten Seite entweichen kann.

Unabhängig davon ist dafür Sorge zu tragen, daß im Normalfall die Öffnungen im Bodenhereich des C-förmigen Kanals verschlossen sind, damit der Verbundabschluß der Glasscheibe durch eindringende Feuchtigkeit nicht beeinträchtigt werden kann. Die die Halteprofile mit den Pfosten und Riegeln verbindenden Befestigungsschrauben werden durch im nasenförmigen Vorsprung der Pfosten und Riegel angeordnete Einnietmuttern gehalten. Die Köpfe der Schrauben, die üblicherweise als Innensechskantschrauben ausgebildet sind, befinden sich innerhalb der Halteprofile. Bei einer Anordnung der Köpfe auf der Außenfläche des Halteprofiles würde die Gefahr bestehen, daß beim Anziehen der Schraube das Profil verformt wird und damit eine saubere Anlage nicht mehr gewährleistet ist.

Im Falle des außenliegenden Halteprofiles hat die Anordnung der Schraubenköpfe außerdem den Vorteil, daß die über den Schaft der Schraube abfließende Wärme nicht sofort auf die Außenfläche des Profiles übertrogen wird, sondern erst über den Umweg des seitlichen Abfließens in den Querschnitt des Profiles. Die unter dem Schraubenkopf angeordnete Dichtung hat zusätzlich die Aufgabe, diesen Wärmeabfluß zwischen Kopf und Profil zu verlangsamen.

In der Zeichnung wird anhand eines Ausführungsbeispieles die Einzelheiten der erfindungsgemäßen feststehenden Brandschutzverglasung näher erläutert. Es zeigen:
- Figur 1: einen Teilquerschnitt durch das erfindungsgemäße Tragwerk
- Figur 2: einen Teillängsschnitt entlang der Linie A-A in Figur 1.

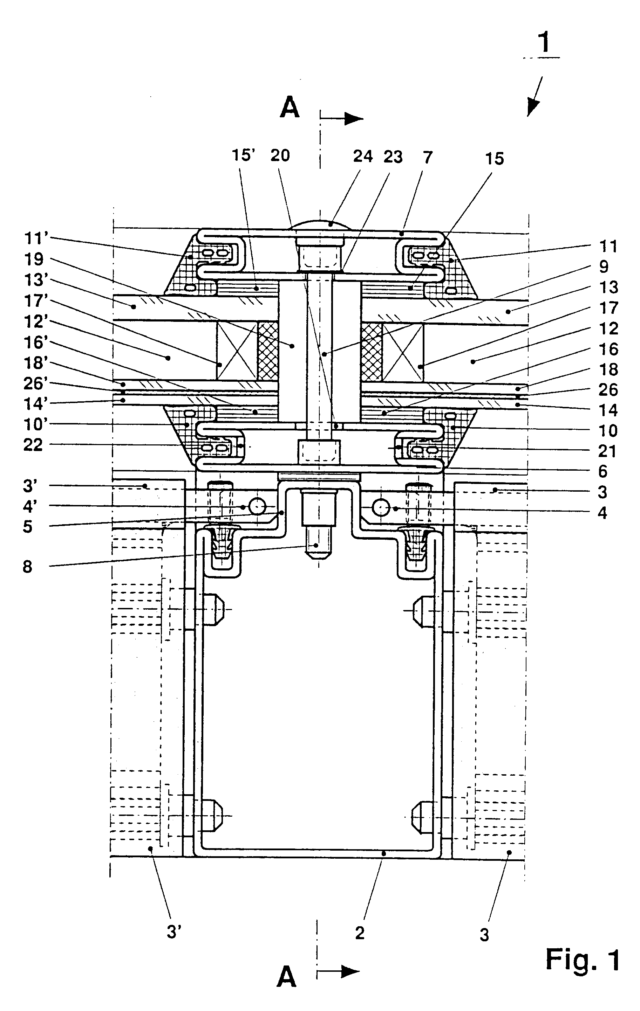

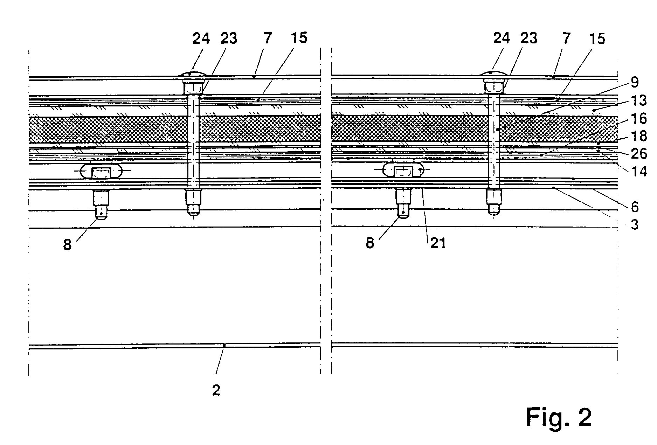

Figur 1 zeigt in einem Teilquerschnitt und Figur 2 in einem Teillängsschnitt entlang der Linie A-A in Figur 1 ein Ausführungsbeispiel des erfindungsgemäßen Tragwerkes 1. Der tragende Metallrahmen besteht in diesem Beispiel aus einem Pfosten 2- Riegel 3,3'-System, wobei die Riegel 3,3' mittels eines axial verschiebbaren Riegelhalters 4,4' mit dem Pfosten 2 verbunden werden. Bezüglich der Einzelheiten dieses Systems wird auf die DE-OS 38 43 737 verwiesen. Sowohl die Pfosten 2 als auch die Riegel 3,3' weisen auf der der Außenseite zugewandten Seite einen nasenförmigen Vorsprung 5 auf. Entlang dieses Vorsprunges 5 sind in parallelem Abstand zueinander zwei Halteprofile 6,7 mittels im Abstand versetzt angeordneter Schrauben 8,9 befestigt. Die Schmalseiten der Halteprofile 6,7 weisen einen C-förmigen Kanal auf, in der Dichtungen 10,10', 11,11' anordenbar sind. Diese Dichtungen 10,10', 11,11' weisen ein bestimmtes Querschnittsprofil auf, so daß sie mit ihrem Fuß in den Längsseiten der Halteprofile 6,7 geklemmt und mit ihrer Dichtseite an den außenliegenden Scheiben 13,14 des Verbundglaselementes 12 zur Anlage kommen. Der Vorteil dieser Dichtanordnung ist, daß die empfindlichen Keramikfaserschichten 15,15', 16,16', insbesondere die auf der Wetterseite liegenden 15,15' durch die Dichtungen 11,11' geschützt werden.

Das Verbundglaselement 12 setzt sich in diesem Beispiel von außen nach innen gesehen aus folgenden Elementen zusammen.
- ein Glas mit Brandschutzfunktion 13,13' mit einer Dicke von 6,5 mm
- ein Luftzwischenraum 17,17' von 12 mm
- ein Verbundsicherheitsglas (VSG-Glas) bestehend aus zwei Einfachscheiben 18,18', 14,14' und einer dazwischenliegenden Folie 26,26' in einer Gesamtdicke von 9 mm.

Das zuerst genannte Glas mit Brandschutzfunktion 13,13' kann zum Beispiel eine entsprechend gefertigte Borosilicatscheibe, z. B. Pyran^{R} (Schott Glaswerke Mainz) sein.

Zur Erfüllung der DIN 4102 Teil 13 ist nun wesentlich, daß im Brandfall auf der feuerabgekehrten Seite keine Flammen auftreten dürfen. Dabei muß man beachten, daß im Brandfall die Klebe- und Versiegelungsmassen des Verbundglaselementes 12 vergasen können. Im Falle eines absolut dichten Glasfalzraumes 19 würde im Brandfall der Druck in diesem Raum 19 so stark ansteigen, daß das Tragwerk zerstört werden würde und die Verglasung als Raumabschluß nicht mehr wirksam sein könnte. Aus diesem Grunde weist deshalb das am Pfosten 2 befestigte Halteprofil 6 eine Bohrung 20 auf, die zum einen als Durchgang für die Schraube 8 dient und zum anderen als Entlüftung des Glasfalzraumes 19 im Brandfall. Es ist davon auszugehen, daß im Brandfall das Dichtmaterial 10,10' verbrennen würden. Dabei werden die im Bodenbereich des C-förmigen Kanals des Halteprofiles 4 angeordneten Bohrungen bzw. Langlöcher 21,22 freigegeben. Damit können die im Glasfalzraum 19 entstehenden Gase über die Bohrungen 20 und die Langlöcher 21,22 auf die Feuerseite entweichen und dort eventuell verbrennen. Gemäß Figur 2 sind die Langlöcher 21,22 in Längsrichtung in einem Abstand von ca. 250 - 300 mm angeordnet. Das auf der Außenseite angeordnete Halteprofil 7 ist dagegen mittels einer unter dem Kopf der Schraube 9 angeordneten Dichtung 23 abgedichtet. Die Wetterabdichtung des Innenraumes des Halteprofils 7 übernimmt eine in die Bohrung eingesteckte Kappe 24.

## Patentansprüche

1. Tragwerk zur Halterung von Brandschutzverglasungen für vertikale, diagonale und horizontale Bausysteme mit einem aus Hohlprofilteilen gebildeten tragenden Metallrahmen und einer aus mehreren Glasscheiben bestehende Brandschutzverglasung sowie innen und außen angeordneter elastischer und temperaturbeständiger Dichtelemente und darauf flächig einwirkender Halteprofile bzw. Leisten, die mit dem Metallrahmen lösbar verbunden sind,
**dadurch gekennzeichnet,**
daß die Halteprofile (6, 7) als im wesentlichen rechteckige geschlossene Hohlprofile ausgebildet sind, die an den beiden Schmalseiten einen C-förmigen Kanal aufweisen und zwischen denen die als Verbundglasscheibenelement ausgebildete Brandschutzverglasung über aufliegende Keramikfaserschichten (15, 15', 16, 16') eingespannt ist, daß in dem C-förmigen Kanal der Halteprofile (6, 7) je eine die Keramikfaserschichten (15, 15', 16, 16') abdeckende Dichtung (10, 10', 11, 11') angeordnet ist, daß im innenliegenden Halteprofil (6) auf der dem Verbundglasscheibenelement zugewandten Seite im Glasfalzraum (19) und mindestens in einer die Dichtung aufnehmenden Längsseite im Bereich des Bodens des C-förmigen Kanals mehrere im Abstand voneinander liegende Öffnungen (20, 21, 22) angeordnet sind, daß die den Metallrahmen bildenden Hohlprofile (2, 3, 3') einen eine Anschlagfläche für das innenliegende Halteprofil (6) bildenden, nach außen gerichteten nasenförmigen Vorsprung (5) aufweisen und daß das außenliegende Halteprofil (7) im Befestigungsbereich nach außen hin abgedichtet (24) ist.

2. Tragwerk nach Anspruch 1,
**dadurch gekennzeichnet,**
daß der tragende Metallrahmen aus einem Pfosten-Riegelsystem (2, 3, 3') besteht, an dem die Halteprofile (6, 7) mittels versetzt angeordneter Schrauben (8, 9) befestigt sind.

3. Tragwerk nach Anspruch 2,
**dadurch gekennzeichnet,**
daß die Befestigungsschrauben (8, 9) durch im nasenförmigen Vorsprung (5) der Pfosten (2) und Riegel (3, 3') angeordnete Einnietmuttern gehalten werden, wobei die Köpfe der Schrauben (8, 9) sich innerhalb der Halteprofile (6, 7) befinden.

## Claims

1. A support structure for fixing fire-resistant glazing for vertical, diagonal and horizontal construction systems, with a supporting metal frame formed of hollow profile sections and fire-resistant glazing consisting of a plurality of glass panes, and also elastic and temperature-resistant sealing elements arranged on the inside and outside, and holding profiles or bars which act in areal manner thereon, which are detachably connected to the metal frame, characterised in that the holding profiles (6, 7) are constructed as substantially rectangular closed hollow profiles, which have a C-shaped channel on the two narrow sides and between which the fire-resistant glazing, which is designed as a composite glass pane element is clamped by means of overlying ceramic fibre layers (15, 15', 16, 16'), that one seal (10, 10', 11, 11') in each case covering the ceramic fibre layers (15, 15', 16, 16') is located in the C-shaped channel of the holding profiles (6, 7), that a plurality of spaced-apart openings (20, 21, 22) are located in the inner holding profile (6) on the side facing the composite glass pane element in the glass groove space (19) and at least in one long side receiving the seal in the region of the base of the C-shaped channel, that the hollow profiles (2, 3, 3') forming the metal frame have an outward-pointing, nose-shaped projection (5) forming a stop face for the inner holding profile (6) and that the outer holding profile (7) is sealed (24) on the outside in the region of attachment.

2. A support structure according to Claim 1, characterised in that the supporting metal frame consists of a post-and-bolt system (2, 3, 3'), to which the holding profiles (6, 7) are attached by means of offset screws (8, 9).

3. A support structure according to Claim 2, characterised in that the attaching screws (8, 9) are held by rivet nuts located in the nose-shaped projection (5) of the post (2) and bolts (3, 3'), with the heads of the screws (8, 9) being located inside the holding profiles (6, 7).

## Revendications

1. Structure de support pour la fixation de vitrages pare-feu pour des systèmes de construction verticaux, diagonaux et horizontaux, comportant un cadre métallique de support formé de profilés creux et un vitrage pare-feu constitué de plusieurs vitres, ainsi que des éléments d'étanchéité élastiques et résistant à la température, agencés intérieurement et extérieurement et des barrettes ou profilés de maintien agissant en surface sur ceux-ci, qui sont reliés de façon amovible au cadre métallique,
caractérisée en ce que les profilés de maintien (6,7) sont réalisés sous forme de profilés creux fermés généralement rectangulaires, qui présentent, sur les deux côtés étroits, un canal en forme de C et entre lesquels le vitrage pare-feu réalisé sous forme d'un élément de vitre composite est serré par l'intermédiaire de couches de fibres céramiques appliquées (15,15',16,16'), en ce que, dans le canal en forme de C des profilés de maintien (6,7), il est agencé, à chaque fois, un joint étanche (10,10',11,11') recouvrant les couches de fibres céramiques (15,15',16,16'), en ce que, dans le profilé de maintien intérieur (6), sur le côté en regard de l'élément de vitre composite dans l'espace de feuillure (19) et au moins dans un côté longitudinal recevant le joint étanche dans la zone du fond du canal en forme de C, sont agencées plusieurs ouvertures (20,21,22) se trouvant à distance l'une de l'autre, en ce que les profilés creux (2,3,3') formant le cadre métallique présentent une saillie (5) en forme d'ergot orientée vers l'extérieur et formant une surface de butée pour le profité de maintien intérieur (6), et en ce que le profité de maintien extérieur (7) est étanchéifié vers l'extérieur (24) dans la zone de fixation.

2. Structure de support selon la revendication 1,
caractérisée en ce que le cadre métallique de support est constitué d'un système de montants et traverses (2,3,3'), sur lequel sont fixés les profilés de maintien (6,7) au moyen de vis (8,9) agencées de façon décalée.

3. Structure de support selon la revendication 2,
caractérisée en ce que les vis de fixation (8,9) sont maintenues par des écrous rivés agencés dans la saillie en forme d'ergot (5) des montants (2) et traverses (3,3'), les têtes des vis (8,9) se trouvant à l'intérieur des profilés de maintien (6,7).
